# EUROPEAN PATENT APPLICATION

(11) **EP 4 715 503 A1**
(43) Date of publication of application: **25.03.2026**
(21) Application number: 25204435.9
(22) Date of filing: 24.09.2025
(51) Int. Cl.: G05B 19/404

(54) **SYSTEM AND METHOD FOR CORRECTING EXTRINSIC LOADING EFFECTS ON KINEMATIC ACCURACY OF A MACHINING ASSEMBLY**

(30) Priority: 24.09.2024 US 202418894941
(71) Applicant: PRATT & WHITNEY CANADA CORP., Longueuil, Québec J4G 1A1 (CA)
(72) Inventor: ING, Visal, (01BE5) Longueuil, J4G 1A1 (CA); GUIASSA, Rachid, (01BE5) Longueuil, J4G 1A1 (CA)
(74) Representative: Dehns

(57) **Abstract**

A method for correcting extrinsic loading effects on kinematic accuracy of a machining assembly (20) includes determining, for a positioning system (32) of the machining assembly (20) including a cantilevered arm (44) and a rotary table (34) mounted on the cantilevered arm (44), a first position and a first orientation of a first axis (54) and a second position and a second orientation of a second axis (56), filling a machining tank (46) with a dielectric fluid, determining a third position and a third orientation of the first axis (54) and a fourth position and a fourth orientation of the second axis (56), and determining position and orientation correction factors for the first axis (54) and the second axis (56) using a position and orientation deviation of the first axis (54) and the second axis (56) in the first condition from the first axis (54) and the second axis (56) in the second condition.

## Description

### TECHNICAL FIELD

This disclosure relates generally to workpiece machining assemblies and more particularly to systems and methods for correcting machining assembly positing systems to account for extrinsic loading effects.

### BACKGROUND OF THE ART

The machining of workpieces using computer numerical control (CNC) machining processes can require a substantial degree of precision in the positioning and movement of workpieces. In particular, the position and orientation of a workpiece relative to a machining system must be accurately controlled. Various systems and methods are known in the art for controlling workpiece positioning during machining operations. While these known systems and methods may be suitable for their intended purposes, there is always room in the art for improvement.

### SUMMARY

It should be understood that any or all of the features or embodiments described herein can be used or combined in any combination with each and every other feature or embodiment described herein unless expressly noted otherwise.

According to an aspect of the present invention, a method for correcting extrinsic loading effects on kinematic accuracy of a machining assembly includes determining, for a first condition of a positioning system of the machining assembly including a rotary table, a base, and a cantilevered arm with a load installed on the rotary table, the rotary table, the base, the cantilevered arm, and the load disposed within a machining tank of the machining assembly, the cantilevered arm extending between and to a first arm end and a second arm end along a first axis of the cantilevered arm, the cantilevered arm moveably mounted to the base at the first arm end, the rotary table mounted to the cantilevered arm at the second arm end, the rotary table rotatable about a second axis of the rotary table, a first position and a first orientation of the first axis and a second position and a second orientation of the second axis, filling the machining tank with a dielectric fluid, determining, for a second condition of the positioning system subsequent to filling the machining tank with the dielectric fluid, a third position and a third orientation of the first axis and a fourth position and a fourth orientation of the second axis, and determining position and orientation correction factors for the first axis and the second axis using a position and orientation deviation of the first axis and the second axis in the first condition from the first axis and the second axis in the second condition.

In any of the aspects or embodiments described above and herein, the machining assembly may further include a machining system, and the method may further include machining a workpiece installed on the rotary table with the machining system by controlling the positioning system, with a controller of the machining assembly, to position the workpiece using the position and orientation correction factors.

In any of the aspects or embodiments described above and herein, the method may further include determining, for a machined condition subsequent to machining at least a portion of the workpiece, a fifth position and a fifth orientation of the first axis and a sixth position and a sixth orientation of the second axis and updating the position and orientation correction factors for the first axis and the second axis using a position and orientation deviation of the first axis and the second axis in the machined condition from the first axis and the second axis in the second condition.

In any of the aspects or embodiments described above and herein, machining the workpiece may include applying a wire electric discharge machining (WEDM) process to the workpiece.

In any of the aspects or embodiments described above and herein, determining the third position, the third orientation, the fourth position, and the fourth orientation may be performed for a plurality of different fluid heights of the dielectric fluid within the machining tank.

In any of the aspects or embodiments described above and herein, determining the third position, the third orientation, the fourth position, and the fourth orientation may be performed for a plurality of different positions of the positioning system.

In any of the aspects or embodiments described above and herein, the first axis may intersect the second axis.

In any of the aspects or embodiments described above and herein, the first axis may intersect the second axis at a pivot axis, the rotary table may be pivotable relative to the cantilevered arm at the pivot axis, and the pivot axis may be perpendicular to the second axis.

In any of the aspects or embodiments described above and herein, the method may further include determining, subsequent to installing the load on a rotary table and prior to filling the machining tank with the dielectric fluid, a fifth position and a fifth orientation of the first axis and a sixth position and a sixth orientation of the second axis and determining the position and orientation correction factors for the first axis and the second axis by additionally using the fifth position, the fifth orientation, the sixth position, and the sixth orientation.

In any of the aspects or embodiments described above and herein, determining the third position, the third orientation, the fourth position, and the fourth orientation may include measuring a position of a measurement artifact installed on the rotary table.

According to another aspect of the present invention, a machining assembly includes a machining tank, a positioning system, and a computer numerical control (CNC) controller. The positioning system is disposed within the machining tank. The positioning system includes a base, a cantilevered arm, and a rotary table. The cantilevered arm extends between and to a first arm end and a second arm end along a first axis of the cantilevered arm. The cantilevered arm is moveably mounted to the base at the first arm end. The rotary table is mounted to the cantilevered arm at the second arm end. The rotary table is rotatable about a second axis of the rotary table. The CNC controller configured to control movement of the cantilevered arm and the rotary table. The CNC controller includes a processor connected in signal communication with a non-transitory memory storing instructions which, when executed by the processor, cause the processor to determine, using position and orientation correction factors for the first axis and the second axis based on a position and orientation deviation of the first axis and the second axis in a first condition of the machining assembly from the first axis and the second axis in a second condition of the machining assembly, a first estimated position and a first estimated orientation of the first axis and a second estimated position and a second estimated orientation of the second axis. The machining tank is empty of a dielectric fluid in the first condition. The machining tank is filled with the dielectric fluid in the second condition. The instructions, when executed by the processor, further cause the processor to control movement of the cantilevered arm the rotary table for a machining process of a workpiece installed on the rotary table using the position and orientation correction factors.

In any of the aspects or embodiments described above and herein, the instructions, when executed by the processor, may further cause the processor to determine, for a machined condition of the machining assembly subsequent to machining at least a portion of the workpiece, a first position and a first orientation of the first axis and a second position and a second orientation of the second axis using a mass and a volume of the workpiece determined subsequent to machining at least the portion of the workpiece and update the position and orientation correction factors for the first axis and the second axis using a position and orientation deviation of the first axis and the second axis in the machined condition from the first axis and the second axis in the second condition.

In any of the aspects or embodiments described above and herein, the machining assembly may further include a wire electric discharge machining (WEDM) system.

In any of the aspects or embodiments described above and herein, the instructions, when executed by the processor, may further cause the processor to control the WEDM system for the machining process to machine at least a portion of the workpiece.

In any of the aspects or embodiments described above and herein, the first axis may intersect the second axis.

In any of the aspects or embodiments described above and herein, the first axis may intersect the second axis at a pivot axis, the rotary table may be pivotable relative to the cantilevered arm at the pivot axis, and the pivot axis may be perpendicular to the second axis.

According to another aspect of the present disclosure, a method for correcting extrinsic loading effects on kinematic accuracy of a machining assembly includes determining, for an unloaded condition of a positioning system of the machining assembly including a rotary table, a base, and a cantilevered arm, the rotary table, the base, and the cantilevered arm disposed within a machining tank of the machining assembly, the cantilevered arm movably mounted to and between the base and the rotary table, the rotary table rotatable about a second axis of the rotary table, a second unloaded position and a second unloaded orientation of the second axis, installing a load on a rotary table, filling the machining tank with a dielectric fluid such that at least a portion of the base, the cantilevered arm, and the load is immersed in the dielectric fluid, determining, for a loaded condition of the position system subsequent to filling the machining tank with the dielectric fluid, a second loaded position and a second loaded orientation of the second axis, determining position and orientation correction factors for the second axis using a position and orientation deviation of the second axis in the loaded condition from the second axis in the unloaded condition, and machining a workpiece installed on the rotary table with a machining system of the machining assembly by controlling the positioning system, with a controller of the machining assembly, to position the workpiece using the position and orientation correction factors.

In any of the aspects or embodiments described above and herein, machining the workpiece may include applying a wire electric discharge machining (WEDM) process to the workpiece.

In any of the aspects or embodiments described above and herein, determining the second loaded position and the second loaded orientation may be performed for a plurality of different fluid heights of the dielectric fluid within the machining tank.

In any of the aspects or embodiments described above and herein, determining the second loaded position and the second loaded orientation may be performed for a plurality of different positions of the positioning system.

The present disclosure, and all its aspects, embodiments and advantages associated therewith will become more readily apparent in view of the detailed description provided below, including the accompanying drawings.

### DESCRIPTION OF THE DRAWINGS

FIG. 1 illustrates a perspective view of a portion of a machining assembly, in accordance with one or more embodiments of the present disclosure.
FIG. 2 schematically illustrates a machining assembly, in accordance with one or more embodiments of the present disclosure.
FIG. 3 schematically illustrates a machining assembly, in accordance with one or more embodiments of the present disclosure.
FIG. 4 schematically illustrates a machining assembly, in accordance with one or more embodiments of the present disclosure.
FIG. 5 illustrates flow chart depicting a method for correcting for extrinsic loading effects on the kinematic accuracy of a machining assembly, in accordance with one or more embodiments of the present disclosure.

### DETAILED DESCRIPTION

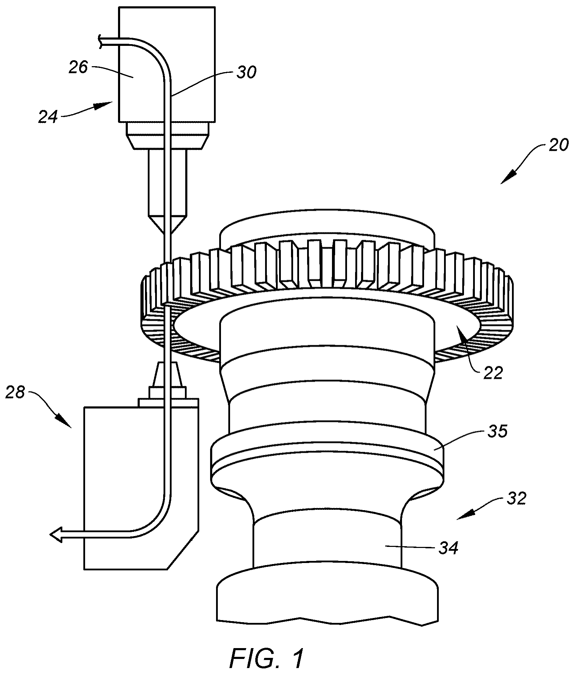

FIG. 1 illustrates a perspective view of a portion of an exemplary machining assembly 20 for machining a workpiece 22. The machining assembly 20 of FIG. 1 includes a wire electric discharge machining (WEDM) system 24. The WEDM system 24 includes an upper member 26 and a lower member 28. In the WEDM system 24 of FIG. 1, a wire 30 is continuously fed from the upper member 26 to the lower member 28, during a machining operation. The motion of the wire 30 proximate the workpiece 22 generates sparks between the wire 30 and the workpiece 22 as the wire is fed from the upper member 26 to the lower member 28, thereby allowing the WEDM system 24 to cut the workpiece 22 as necessary to form a machined component.

The machining assembly 20 includes a positioning system 32. A portion of the positioning system 32 is illustrated in FIG. 1. The positioning system 32 is configured to position the workpiece 22 relative to the WEDM 24 by moving the workpiece 22 relative to an x-axis, a y-axis, and a z-axis, as well as by rotating the workpiece 22 relative to one or more axes, as will be discussed in further detail. In FIG. 1, a disk-shaped workpiece 22 is installed on a pivotable surface (e.g., a rotary table 34) of the positioning system 32. The disk-shaped workpiece 22 may be part of a turbine disk or other bladed disk, however, the present disclosure is not limited to any particular shape or configuration of the workpiece 22. The workpiece 22 may be mounted to rotary table 34 using fixturing 35 including fasteners (e.g., bolts) and/or other assembly components. Aspects of the present disclosure positioning system 32 are described with reference to the WEDM system 24, however, the present disclosure is not limited to use with WEDM systems and may be used with other machining system configurations as well.

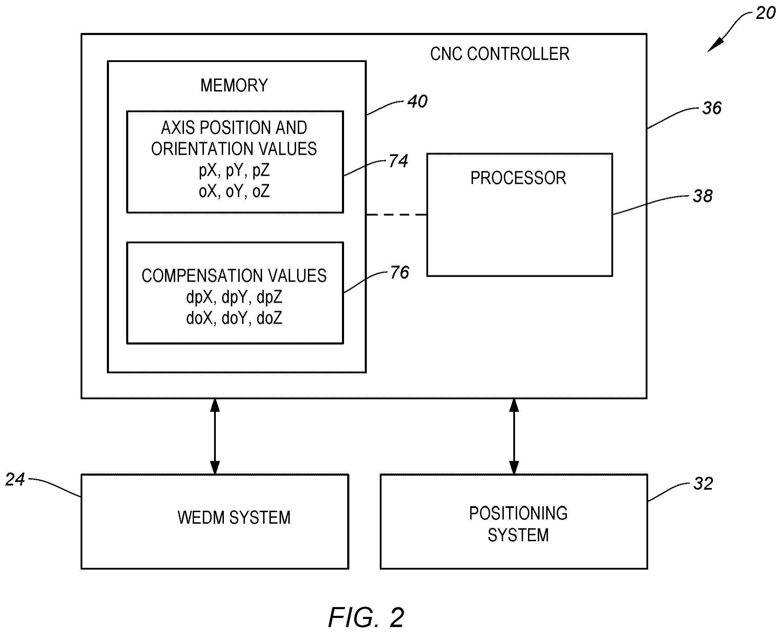

Referring to FIG. 2, the machining assembly 20 may further include a computer numerical control (CNC) controller 36. The CNC controller 36 may be in signal communication with the WEDM system 24 and the positioning system 32. The CNC controller 36 includes a processor 38 connected in signal communication with memory 40. The processor 38 may include any type of computing device, computational circuit, or any type of process or processing circuit capable of executing a series of instructions that are stored in the memory 40, thereby causing the processor 38 to perform or control one or more steps or other processes. The processor 38 may include multiple processors and/or multicore CPUs and may include any type of processor, such as a microprocessor, digital signal processor, co-processors, a micro-controller, a microcomputer, a central processing unit, a field programmable gate array, a programmable logic device, a state machine, logic circuitry, analog circuitry, digital circuitry, etc., and any combination thereof. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The instructions may be in the form of a CNC programming language (e.g., G-code, M-code, etc.), or another suitable programming language which can be executed by the processor 38. For example, the CNC programming language instructions may be executed by the processor 38 to control movement and positions of components of the WEDM system 24 and the positioning system 32. The instructions stored in memory 40 may be generated by computer-aided design (CAD) or computer-aided manufacturing (CAM) software, whereby the physical dimensions of a particular workpiece (e.g., the workpiece 22) may be translated into instructions (e.g., CNC) instructions). The executable instructions may apply to any functionality described herein to enable the machining assembly 20 to accomplish the same algorithmically and/or coordination of machining assembly 20 components. The memory 40 may include a single memory device or a plurality of memory devices (e.g., a computer-readable storage device that can be read, written, or otherwise accessed by a general purpose or special purpose computing device, including any processing electronics and/or processing circuitry capable of executing instructions). The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly or indirectly coupled to the CNC controller 36. The CNC controller 36 may include, or may be in communication with, an input device that enables a user to enter data and/or instructions, and may include, or be in communication with, an output device configured, for example to display information (e.g., a visual display or a printer), or to transfer data, etc. Communications between the CNC controller 36 and components of the machining assembly 20 (e.g., the WEDM system 24 and the positioning system 32) may be via a hardwire connection or via a wireless connection. A person of skill in the art will recognize that portions of the controller may assume various forms (e.g., digital signal processor, analog device, etc.) capable of performing the functions described herein.

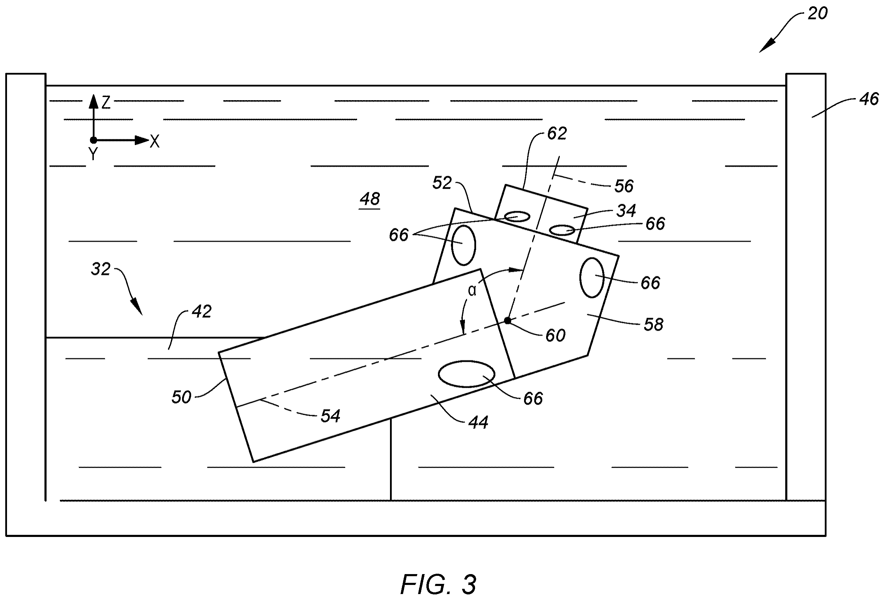

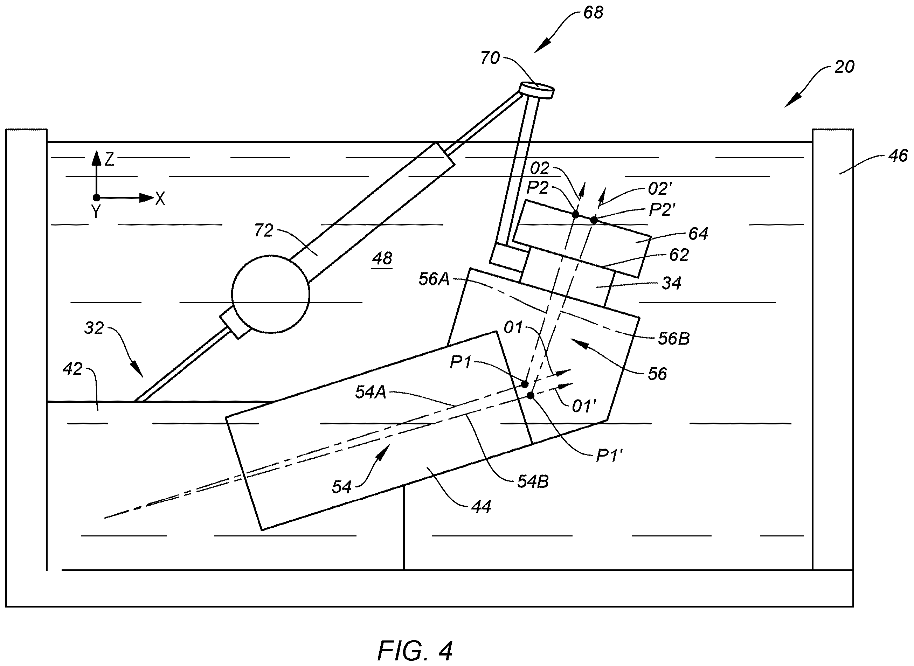

Referring to FIGS. 3 and 4, the positioning system 32 includes a base 42, a cantilevered arm 44, and the rotary table 34 positioned within a machining tank 46 of the machining assembly 20. The machining tank 46 may be filled with a dielectric fluid 48 (e.g., deionized water) which may be used to provide insulation against premature discharging of the WEDM system 24, cool machining equipment (e.g., the WEDM system 24) and/or the workpiece 22, and/or to assist in the disposal of material removed from the workpiece 22 during machining. The cantilevered arm 44 extends between and to a first arm end 50 and a second arm end 52 along an axis 54. The cantilevered arm 44 is moveably connected to the base 42 at (e.g., on, adjacent, or proximate) the first arm end 50. The positioning system 32 may be configured, for example, to move the cantilevered arm 44 along one or more of the x-axis, the y-axis, and the z-axis and/or rotate the cantilevered arm 44 about the axis 54.

The rotary table 34 is mounted to or otherwise positioned at (e.g., on, adjacent, or proximate) the second arm end 52 of the cantilevered arm 44. The rotary table 34 is rotatable about an axis 56 (e.g., a rotational axis). In some embodiments, the axis 56 may intersect the axis 54 such that the axis 56 and the axis 54 define an angle α therebetween. However, the present disclosure is not limited to this particular orientation of the cantilevered arm 44 (e.g., the axis 54) relative to the rotary table 34 (e.g., the axis 56). In some embodiments, the cantilevered arm 44 may include a rotational member 58 configured to control the orientation of the axis 54 relative to the axis 56. In other words, the rotational member 58 may rotate to control a magnitude of the angle α defined between the axis 54 and the axis 56. For example, the rotational member 58 may be configured to rotate about an axis 60. The axis 60 may extend substantially perpendicular to the axis 54 and/or the axis 56. The rotary table 34 includes a mounting surface 62. The mounting surface 62 is configured to support the workpiece 22 as well as associated fixturing and/or fasteners (e.g., bolts, clamps, etc.) used to securely mount the workpiece 22 to the mounting surface 62 of the rotary table 34.

FIG. 4 illustrates a load 64 mounted to the mounting surface 62 of the rotary table 34. The load 64 may include the workpiece 22 (see FIG. 1). The load 64 may additionally include the fixturing used to mount the load 64 to the mounting surface 62 or to otherwise support the load 64. As will be discussed in further detail, the load 64 may alternatively be a mock workpiece configured with a mass and center of mass location which is the same as or similar to a predetermined reference workpiece 22.

Due to extrinsic loading effects experienced by the positioning system 32 in operation, the rotary table 34 and the cantilevered arm 44 may experience a position and orientation shift, relative to positions and orientations of the rotary table 34 and the cantilevered arm 44 absent these extrinsic loading effects. For example, the rotary table 34 and the cantilevered arm 44 may experience extrinsic loading effects as a result of the load 64 installed on the rotary table 34 as well as from immersion of the rotary table 34, the cantilevered arm 44, and the load 64 within the dielectric fluid 48. FIG. 4 illustrates the axis 54 of the cantilevered arm 44 in an unloaded condition 54A (hereinafter the "unloaded axis 54A") and in a loaded condition 54B (hereinafter the "loaded axis 54B"). Similarly, FIG. 4 illustrates the axis 56 of the rotary table 34 in an unloaded condition 56A (hereinafter the "unloaded axis 56A") and in a loaded condition 56B (hereinafter the "loaded axis 56B"). In other words, the unloaded axes 54A, 56A indicate an exemplary position and orientation of the axes 54, 56 when the extrinsic loading effects are absent, for example, when the load 64 is not installed and the dielectric fluid 48 is not present within the machining tank 46 (e.g., the machining tank 46 is free of the dielectric fluid 48). The loaded axes 54B, 56B indicate an exemplary position and orientation of the axes 54, 56 when the extrinsic loading effects are present, for example, when the load 64 is installed on the rotary table 34 and/or the rotary table 34, the cantilevered arm 44, and the load 64 are immersed in the dielectric fluid 48.

The gravitational force (*F_{G}*) applied to the positioning system 32 (e.g., the cantilevered arm 44) by the load 64 installed on the rotary table 34 may tend to cause a vertically downward deviation of the position and orientation of the axes 54, 56, relative to the unloaded axes 54A, 56A. Characteristics of the load 64 such as, but not limited to, weight, weight distribution and center of mass, alignment of the load 64 on the rotary table 34, load 64 machining status (e.g., unmachined, partially machined, etc.), and the like may impact a magnitude of the position and orientation differences between the unloaded axes 54A, 56A and the loaded axes 54B, 56B.

In contrast, immersion of the rotary table 34, the cantilevered arm 44, and the load 64 in the dielectric fluid 48 may tend to cause a vertically upward deviation of the position and orientation of the axes 54, 56, relative to the unloaded axes 54A, 56A. This vertically upward deviation may result, in principle part, from an upward buoyant force (*F_{B}*) applied to the rotary table 34, the cantilevered arm 44, and the load 64 immersed in the dielectric fluid 48 (e.g., Archimedes' Principle). The impact of the dielectric fluid 48 on the position and orientation of the axes 54, 56 may be exacerbated by the presence of gas pockets 66 (e.g., air) which may form within cavities of the rotary table 34, the cantilevered arm 44, and/or the load 64 or otherwise become trapped by the rotary table 34, the cantilevered arm 44, and/or the load 64. The deviation of the position and orientation of the axes 54, 56 caused by the gas pockets 66 may vary as a result of the positions and orientations the rotary table 34, the cantilevered arm 44, and/or the load 64, for example, during a machining operation. Of course, characteristics of the dielectric fluid 48 such as, but not limited to, fluid height, specific gravity, temperature, and the like may additionally affect the deviation of the position and orientation of the axes 54, 56, relative to the unloaded axes 54A, 56A.

During machining of a workpiece (e.g., the workpiece 22) mounted on the rotary table 34, the actual position and orientation of the axis 56 of the rotary table 34 should be precisely known to allow the CNC controller 36 to accurately position and/or rotate the workpiece 22 relative to the WEDM system 24 (e.g., the wire 30). Deviation between the expected and the actual position and orientation of the axes 54, 56, for example, as a result of the forces *F_{G}, F_{B},* can result in relative mispositioning of the workpiece 22 relative to the WEDM system 24 (e.g., the wire 30). For example, the machining instructions executed by a CNC controller to machine a workpiece may not account for extrinsic loading effects experienced by the machining assembly, such as those previously discussed. As a result, the machining accuracy for the workpiece 22 may be negatively impacted, potentially resulting in machined workpieces which may not be acceptable for their intended use (e.g., as machinery components).

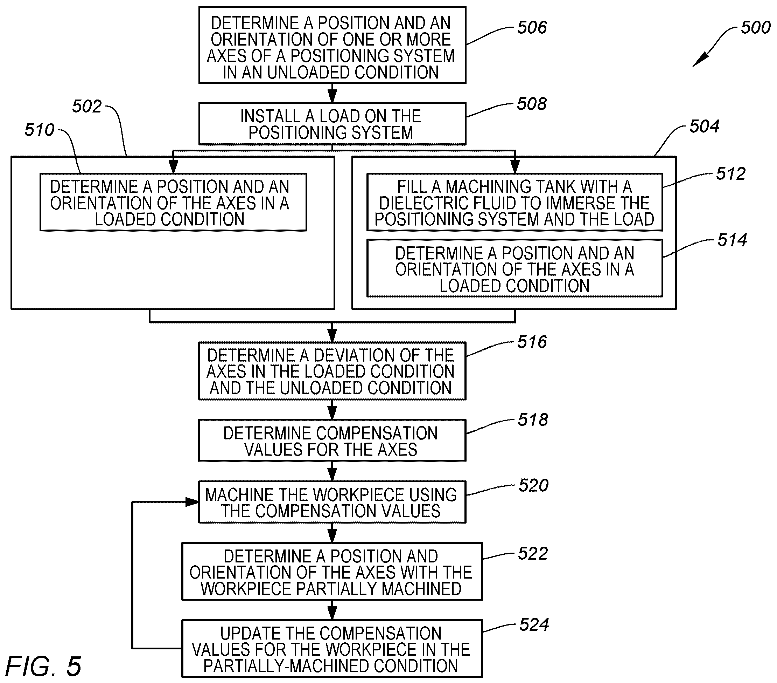

Referring to FIGS. 2, 4, and 5, a method 500 for correcting for extrinsic loading effects on the kinematic accuracy of a machining assembly is provided. FIG. 5 illustrates a flowchart of the method 500. For ease of description, the method 500 is described below with reference to the machining assembly 20 including the CNC controller 36 and the positioning system 32. The method 500, however, may alternatively be performed with other machining system configurations. Unless otherwise noted herein, it should be understood that the steps of method 500 are not required to be performed in the specific sequence in which they are discussed below and, in various embodiments, the steps of method 500 may be performed separately or simultaneously. The method 500 includes a load correction 502 for the extrinsic loading effects of the load 64 installed on the rotary table 34 and a fluid correction 504 for the extrinsic loading effects of the rotary table, the cantilevered arm 44, and/or the load 64 immersed in the dielectric fluid 48. The method 500 may include performance of the load correction 502, the fluid correction 504, or both of the load correction 502 and the fluid correction 504.

Step 506 (e.g., of the load correction 502) includes determining (e.g., measuring) a position and an orientation of the axes 54, 56 using a measurement assembly 68. **In** particular, step 506 includes determining the position and orientation of the axes 54, 56 with the positioning system 32 in an unloaded condition, that is, without the load 64 installed on the rotary table 34 and without the dielectric fluid 48 disposed in the machining tank 46. For example, the measurement assembly 68 may be used to measure a position and orientation of components of the positioning system 32 (e.g., the rotary table 34) to determine a position and orientation of unloaded axes 54A, 56A relative to a three-dimensional (3D) coordinate system (e.g., a machine coordinate system (MCS)) of the machining assembly 20. As shown in FIG. 4, a position and orientation of the rotary table 34 may be measured using a measurement artifact 70 of the measurement assembly 68. The position and orientation of the measurement artifact 70 may be determined relative to a datum such as an origin (i.e., a reference point) of the 3D coordinate system of the machining assembly 20. For example, the position and orientation of the measurement artifact 70 may be expressed using one or more positions represented by x-y-z coordinates. The one or more coordinate positions of the measurement artifact 70 may be provided as inputs to the CNC controller 36. The position and orientation of the measurement artifact 70 may be measured using, for example, a coordinate measuring machine (CMM) touch probe, a dial indicator, a laser scanner, and the like, and the present disclosure is not limited to any particular process or equipment for determining the position and orientation of the measurement artifact 70. As shown in FIG. 4, the position of the measurement artifact 70 may be measured from one or more fixed positions using a dial indicator 72. The dial indicator 72 may be positioned to measure a distance between the measurement artifact 70 and one or more predetermined positions on the machining assembly 20 such as, but not limited to, the base 42, the machining tank 46, and/or other components of the machining assembly 20.

Step 506 may include installing the measurement artifact 70 on the positioning system 32. For example, the measurement artifact 70 may be installed on the rotary table 34, as shown in FIG. 4. In some embodiments, the mass of the measurement artifact 70 may be assumed to have a negligible impact on the position and orientation of the axes 54, 56. In some embodiments, the mass and center of mass location (e.g., an x-y-z coordinate position of the center of mass) of the measurement artifact 70 may be provided as an input to the CNC controller 36 to compensate for the mass of the measurement artifact 70 when determining the position and orientation of the axes 54, 56.

The position and orientation of the unloaded axes 54A, 56A in the unloaded condition may have axis position and orientation values 74 which may be stored, for example, in the memory 40 (see FIG. 2). For example, the position and orientation of the unloaded axes 54A, 56A may be represented by one or more known positions P1-n along the unloaded axes 54A, 56A and/or one or more known orientations O1-n along the unloaded axes 54A, 56A. The known positions P1-n may be expressed as x-y-z coordinate positions (e.g., p^{x}, p^{y}, p^{z}). The known orientations O1-n may be expressed as an angle of the unloaded axis 54A and/or the unloaded axis 56A relative to a reference axis (e.g., a vertical axis). Alternatively, the known orientations O1-n may be expressed using x-y-z coordinate positions (e.g., o^{x}, o^{y}, o^{z}) or a slope of the unloaded axis 54A and/or the unloaded axis 56A between two or more coordinate positions along the respective unloaded axes 54A, 56A. The present disclosure is not limited to any particular means for expressing the positions P1-n, P1'-n' and orientations O1-n, O1'-n' of the unloaded axes 54A, 56A. As shown in FIG. 4, a first known position P1 may correspond to an intersection between the unloaded axis 54A and the unloaded axis 56A and a second known position P2 may correspond to an intersection between the unloaded axis 56A and a surface of the load 64. As also shown in FIG. 4, a first known orientation O1 may correspond to an orientation of the unloaded axis 54A relative to the known position P1 and a second known orientation O2 may correspond to an orientation of the unloaded axis 56A relative to the known position P2. It should be understood, however, that the known positions P1, P2 and orientations O1, O2 are exemplary, and the present disclosure is not limited to the particular known positions P1, P2 and orientations O1, O2 illustrated in FIG. 4.

Step 508 includes installing the load 64 on the rotary table 34. As previously discussed, the load 64 may be the workpiece 22. Depending on the size and/or shape of the workpiece 22, however, it may be difficult to install the workpiece 22 with the measurement artifact 70 mounted to the rotary table 34. Accordingly, the load 64 may instead be a mock workpiece which has a different shape than the workpiece 22 but a mass and center of mass location which are the same as or similar to the workpiece 22. The mock workpiece, therefore, may accommodate the positioning of the measurement artifact 70 on the positioning system 32.

Step 510 (e.g., of the load correction 502) includes determining (e.g., measuring) the position of the measurement artifact 70 subsequent to installation of the load 64 on the positioning system 32. In other words, the position of the measurement artifact 70 is measured with the axes 54, 56 in a loaded condition (e.g., the loaded axes 54B, 56B). The position and orientation of the measurement artifact 70 may be measured and expressed as previously discussed. For example, the position and orientation of the measurement artifact 70 may be expressed using one or more positions represented by x-y-z coordinates. The one or more coordinate positions may be provided as inputs to the CNC controller 36.

Step 512 (e.g., of the fluid correction 504) includes filling the machining tank 46 with the dielectric fluid 48. The machining tank 46 may be filled with the dielectric fluid 48 to a predetermined fluid height. With the dielectric fluid 48 at the predetermined fluid height, all or a portion of the rotary table 34, the cantilevered arm 44, and/or the load 64 may be immersed in the dielectric fluid 48. Step 512 may be performed subsequent to completion of the steps 506, 508, 510 for the load correction 502. Alternatively, step 512 may be performed directly following installation of the load 64 on the rotary table 34 (see step 506).

Step 514 (e.g., of the fluid correction 504) includes determining (e.g., measuring) the position of the measurement artifact 70 subsequent to filling the machining tank 46 with the dielectric fluid 48 (see step 512). In other words, the position of the measurement artifact 70 is measured with the axes 54, 56 in a loaded condition (e.g., the loaded axes 54B, 56B). The position and orientation of the measurement artifact 70 may be measured and expressed as previously discussed. For example, the position and orientation of the measurement artifact 70 may be expressed using one or more positions represented by x-y-z coordinates. The one or more coordinate positions may be provided as inputs to the CNC controller 36.

Step 512 and 514 may be repeated to measure the position of the measurement artifact 70 under various fluid conditions of the rotary table 34, the cantilevered arm 44, and the load 64 with the dielectric fluid 48. For example, the position of the measurement artifact 70 may be determined for a plurality of different predetermined fluid heights of the dielectric fluid 48 in the machining tank 46. Additionally or alternatively, the position of the measurement artifact 70 may be determined for different positions of the rotary table 34, the cantilevered arm 44, and/or the load 64 immersed in the dielectric fluid 48.

Step 516 includes determining a deviation of the position and orientation of the loaded axes 54B, 56B relative to the unloaded axes 54A, 56A. Step 516 may include determining the position and orientation deviations for a plurality of different loaded axes 54B, 56B measurements determined for the load correction 502 and/or the fluid correction 504. The deviation of the position and orientation of the loaded axes 54B, 56B relative to the unloaded axes 54A, 56A may be expressed, for example, as a difference in the x-y-z coordinates.

Step 518 includes determining (e.g., with the CNC controller 36) compensation values 76 based on the determined deviations of the positions and orientations of the loaded axes 54B, 56B relative to the unloaded axes 54A, 56A (see step 516). The compensation values 76 may be used by the CNC controller 36 to determine an estimated position and orientation of the axes 54, 56 with the workpiece 22 installed on the rotary table 34 and with the rotary table 34, the cantilevered arm 44, and the load 64 immersed in the dielectric fluid 48. For example, known values of the position (e.g., P1, P2, ... Pn) and orientation (e.g., O1, O2, ... On) of the unloaded axes 54A, 56A may be modified using the compensation values 76 to determine one or more estimated positions (P1'-n') and/or one or more estimated orientations (O1'-n') of the axes 54, 56 during a machining operation with the workpiece 22 installed on the rotary table 34 and with the rotary table 34, the cantilevered arm 44, and the load 64 immersed in the dielectric fluid 48. As shown in FIG. 4, a first estimated position P1' for the loaded axes 54B, 56B may correspond to the known position P1 of the unloaded axes 54A, 56A modified by the compensation values 76. Similarly, a second estimated position P2' of the loaded axis 56B may correspond to the known position P2 of the unloaded axis 56A modified by the compensation values 76. As also shown in FIG. 4, a first estimated orientation O1' for the loaded axis 54B may correspond to the known orientation O1 of the unloaded axis 54A modified by the compensation values 76. Similarly, a second estimated orientation O2' for the loaded axis 56B may correspond to the known orientation O2 of the unloaded axis 56A modified by the compensation values 76. The values of the estimated positions P1'-n' and orientations O1'-n' of the axes 54, 56 may be stored as the axis position and orientation values 74 in the memory 40 and may be expressed similar to the known positions P1-n and orientations O1-n, as previously discussed.

In some embodiments, steps of the load correction 502 and/or the fluid correction 504 may be repeated as necessary to determine compensation values 76 associated with various weights or weight ranges of the load 64. For example, compensation values 76 may be determined using a plurality of different loads 64 (e.g., mock workpieces) which are representative of a reference workpiece 22 at various stages of machining. As described above, the compensation values 76 may be stored in the memory. Accordingly, the positioning system 32 can be compensated based on a particular weigh, weight distribution, center of mass, and/or dielectric fluid 48 influence of the load 64. Additionally or alternatively, in some embodiments, additional compensation values 76 may be determined for various weights or weight ranges of the load 64 based on interpolation between known and/or estimated positions P1-n, P1'-n' and/or orientations O1-n, O1'-n' of the axes 54, 56.

The compensation values 76 may be expressed as a difference in the x-y-z coordinates associated with the position and orientation of the unloaded axes 54A, 56A and the respective loaded axes 54B, 56B. In some embodiments, the estimated position and orientation of the axis 54 and/or the axis 56 may be the same or substantially the same as the determined position and orientation of the loaded axis 54B and/or the loaded axis 56B. In some other embodiments, however, the compensation values 76 may be additionally modified to account for measurement and machining factors including, but not limited to, fluid characteristics of the dielectric fluid 48, differences (mass, center of mass location, etc.) between the workpiece 22 and an associated mock workpiece, position measurement tolerances, etc. An inspection of the machined workpiece 22 may be performed subsequent to the completion of machining. In some embodiments, the compensation values 76 may be additionally modified based on the inspection of the machined workpiece 22. For example, the compensation values 76 may be additionally modified based on any observed deviations of the machined workpiece 22 from the specifications for the machined workpiece 22. The compensation values 76 may be stored in the memory 40 for use with machining instances of the workpiece 22 (see FIG. 2).

In Step 520, the workpiece 22 is machined. The workpiece 22 may be machined, for example, using the WEDM system 24. In some embodiments, Step 520 may include installing the workpiece 22 on the rotary table 34 in preparation for machining the workpiece 22. The CNC controller 36 controls the positioning system 32 which effects positioning of the workpiece 22 and rotation of the workpiece 22 about the axis 56. The CNC controller 36 controls the positioning and rotation of the workpiece 22 based on the estimated position and orientation of the axis 54 and the axis 56 which are determined using the compensation values 76. Step 520 may include machining the entire workpiece 22. Alternatively, Step 520 may include machining only a portion of the workpiece 22.

In Step 522, the positions (P1'-n') and orientations (O1'-n') of the axis 54 and the axis 56 may be determined (e.g., updated) at various machining stages for the workpiece 22. As the workpiece 22 is machined (e.g., in Step 520), the mass, volume, and the center of mass location for the workpiece 22 will necessarily change due to the removal of material from the workpiece 22 (e.g., due to changes in the forces *F_{G}, F_{B}*). Accordingly, the position and orientation of the axis 54 and the axis 56 may also change during and/or throughout the machining of the workpiece 22. As material is removed from the workpiece 22 during execution of machining instructions by the CNC controller 36, the CNC controller 36 may (e.g., continuously) estimate or otherwise determine the positions (P1'-n') and orientations (O1'-n') of the axis 54 and the axis 56 using mass and volume values of the workpiece 22 included in the machining instructions. In other words, as material is removed from the workpiece 22, the CNC controller 36 may identify a current mass and volume of the workpiece 22 and update the positions (P1'-n') and orientations (O1'-n') of the axis 54 and the axis 56 using the current mass and volume of the workpiece 22. In some embodiments, the CNC controller 36 may also estimate or otherwise determine the positions (P1'-n') and orientations (O1'-n') of the axis 54 and the axis 56 based on changes in the center of mass of the workpiece 22 during machining; however, in the impact of center of mass on the positions (P1'-n') and orientations (O1'-n') of the axis 54 and the axis 56 may typically be negligible.

In Step 524, the CNC controller 36 may determine new compensation values 76 (e.g., the CNC controller 36 may update the compensation values 76 used to execute the machining instructions) based on the determined changes in the positions (P1'-n') and orientations (O1'-n') of the axis 54 and the axis 56, as the workpiece 22 is machined. The additional compensation values 76 may be stored in the memory 40. Steps 520, 522, and 524 may be repeated as necessary until machining of the workpiece 22 is complete. For example, Steps 520, 522, and 524 may be repeated continuously as material is removed from the workpiece 22 or for various predetermined intervals during machining of the workpiece 22.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or **B,** or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A method for correcting extrinsic loading effects on kinematic accuracy of a machining assembly (20), the method comprising:
determining,
for a first condition of a positioning system (32) of the machining assembly (20) including a rotary table (34), a base (42), and a cantilevered arm (44) with a load (64) installed on the rotary table (34), the rotary table (34), the base (42), the cantilevered arm (44), and the load (64) disposed within a machining tank (46) of the machining assembly (20), the cantilevered arm (44) extending between and to a first arm end (50) and a second arm end (52) along a first axis (54) of the cantilevered arm (44), the cantilevered arm (44) moveably mounted to the base (42) at the first arm end (50), the rotary table (34) mounted to the cantilevered arm (44) at the second arm end (52), the rotary table (34) rotatable about a second axis (56) of the rotary table (34),
a first position and a first orientation of the first axis (54) and a second position and a second orientation of the second axis (56);
filling the machining tank (46) with a dielectric fluid;
determining, for a second condition of the positioning system (32) subsequent to filling the machining tank (46) with the dielectric fluid, a third position and a third orientation of the first axis (54) and a fourth position and a fourth orientation of the second axis (56); and
determining position and orientation correction factors for the first axis (54) and the second axis (56) using a position and orientation deviation of the first axis (54) and the second axis (56) in the first condition from the first axis (54) and the second axis (56) in the second condition.

2. The method of claim 1, wherein the machining assembly (20) further includes a machining system (24), the method further comprising:
machining a workpiece (22) installed on the rotary table (34) with the machining system (24) by controlling the positioning system (32), with a controller of the machining assembly (20), to position the workpiece (22) using the position and orientation correction factors.

3. The method of claim 2, further comprising:
determining, for a machined condition subsequent to machining at least a portion of the workpiece (22), a fifth position and a fifth orientation of the first axis (54) and a sixth position and a sixth orientation of the second axis (56); and
updating the position and orientation correction factors for the first axis (54) and the second axis (56) using a position and orientation deviation of the first axis (54) and the second axis (56) in the machined condition from the first axis (54) and the second axis (56) in the second condition.

4. The method of claim 2 or 3, wherein machining the workpiece (22) includes applying a wire electric discharge machining (WEDM) process to the workpiece (22).

5. The method of any preceding claim, wherein determining the third position, the third orientation, the fourth position, and the fourth orientation is performed for a plurality of different fluid heights of the dielectric fluid within the machining tank (46), and/or wherein determining the third position, the third orientation, the fourth position, and the fourth orientation is performed for a plurality of different positions of the positioning system (32).

6. The method of any preceding claim, wherein the first axis (54) intersects the second axis (56).

7. The method of claim 6, wherein the first axis (54) intersects the second axis (56) at a pivot axis, the rotary table (34) is pivotable relative to the cantilevered arm (44) at the pivot axis, and the pivot axis is perpendicular to the second axis (56).

8. The method of any preceding claim, further comprising:
determining, subsequent to installing the load (64) on a rotary table (34) and prior to filling the machining tank (46) with the dielectric fluid, a fifth position and a fifth orientation of the first axis (54) and a sixth position and a sixth orientation of the second axis (56); and
determining the position and orientation correction factors for the first axis (54) and the second axis (56) by additionally using the fifth position, the fifth orientation, the sixth position, and the sixth orientation.

9. The method of any preceding claim, wherein determining the third position, the third orientation, the fourth position, and the fourth orientation includes measuring a position of a measurement artifact installed on the rotary table (34).

10. A machining assembly (20) comprising:
a machining tank (46);
a positioning system (32) disposed within the machining tank (46), the positioning system (32) including a base (42), a cantilevered arm (44), and a rotary table (34),
the cantilevered arm (44) extends between and to a first arm end (50) and a second arm end (52) along a first axis (54) of the cantilevered arm (44), the cantilevered arm (44) is moveably mounted to the base (42) at the first arm end (50), and
the rotary table (34) is mounted to the cantilevered arm (44) at the second arm end (52), the rotary table (34) is rotatable about a second axis (56) of the rotary table (34);
a computer numerical control (CNC) controller (36) configured to control movement of the cantilevered arm (44) and the rotary table (34), the CNC controller (36) including a processor (38) connected in signal communication with a non-transitory memory (40) storing instructions which, when executed by the processor (38), cause the processor (38) to:
determine, using position and orientation correction factors for the first axis (54) and the second axis (56) based on a position and orientation deviation of the first axis (54) and the second axis (56) in a first condition of the machining assembly (20) from the first axis (54) and the second axis (56) in a second condition of the machining assembly (20), a first estimated position and a first estimated orientation of the first axis (54) and a second estimated position and a second estimated orientation of the second axis (56), the machining tank (46) empty of a dielectric fluid in the first condition, the machining tank (46) filled with the dielectric fluid in the second condition; and
control movement of the cantilevered arm (44) the rotary table (34) for a machining process of a workpiece (22) installed on the rotary table (34) using the position and orientation correction factors.

11. The machining assembly of claim 10, wherein the instructions, when executed by the processor (38), further cause the processor (38) to:
determine, for a machined condition of the machining assembly (20) subsequent to machining at least a portion of the workpiece (22), a first position and a first orientation of the first axis (54) and a second position and a second orientation of the second axis (56) using a mass and a volume of the workpiece (22) determined subsequent to machining at least the portion of the workpiece (22); and
update the position and orientation correction factors for the first axis (54) and the second axis (56) using a position and orientation deviation of the first axis (54) and the second axis (56) in the machined condition from the first axis (54) and the second axis (56) in the second condition.

12. The machining assembly of claim 10 or 11, further comprising a wire electric discharge machining (WEDM) system (24), optionally wherein the instructions, when executed by the processor (38), further cause the processor (38) to control the WEDM system (24) for the machining process to machine at least a portion of the workpiece (24).

13. The machining assembly of claim 10, 11 or 12, wherein the first axis (54) intersects the second axis (56), and, optionally, the first axis (54) intersects the second axis (56) at a pivot axis, the rotary table (34) is pivotable relative to the cantilevered arm (44) at the pivot axis, and the pivot axis is perpendicular to the second axis (56).

14. A method for correcting extrinsic loading effects on kinematic accuracy of a machining assembly (20), the method comprising:
determining,
for an unloaded condition of a positioning system (32) of the machining assembly (20) including a rotary table (34), a base (42), and a cantilevered arm (44), the rotary table (34), the base (42), and the cantilevered arm (44) disposed within a machining tank (46) of the machining assembly (20), the cantilevered arm (44) movably mounted to and between the base (42) and the rotary table (34), the rotary table (34) rotatable about an axis (56) of the rotary table (34),
a second unloaded position and a second unloaded orientation of the axis (56);
installing a load (64) on the rotary table (34);
filling the machining tank (46) with a dielectric fluid such that at least a portion of the base (42), the cantilevered arm (44), and the load (64) is immersed in the dielectric fluid;
determining, for a loaded condition of the positioning system (32) subsequent to filling the machining tank (46) with the dielectric fluid, a second loaded position and a second loaded orientation of the axis (56);
determining position and orientation correction factors for the axis (56) using a position and orientation deviation of the second axis (56) in the loaded condition from the axis (56) in the unloaded condition; and
machining a workpiece (22) installed on the rotary table (34) with a machining system (24) of the machining assembly (20) by controlling the positioning system (32), with a controller (36) of the machining assembly (20), to position the workpiece (22) using the position and orientation correction factors.

15. The method of claim 14, wherein machining the workpiece (22) includes applying a wire electric discharge machining (WEDM) process to the workpiece (22), and/or wherein determining the second loaded position and the second loaded orientation is performed for a plurality of different fluid heights of the dielectric fluid within the machining tank (46), and/or wherein determining the second loaded position and the second loaded orientation is performed for a plurality of different positions of the positioning system (32).
